# EUROPÄISCHE PATENTSCHRIFT

(11) **EP 1 574 391 B1**
(45) Veröffentlichungstag und Bekanntmachung des Hinweises auf die Patenterteilung: **03.01.2007**
(21) Anmeldenummer: 05004513.7
(22) Anmeldetag: 02.03.2005
(51) Int. Cl.: B60N 2/36, B60N 2/30

(54) **Fahrzeugsitz, insbesondere Kraftfahrzeug-Rücksitzanlage**
Vehicle seat
Siège de véhicule

(30) Priorität: 08.03.2004 DE 102004011137
(43) Veröffentlichungstag der Anmeldung: 14.09.2005
(73) Patentinhaber: KEIPER GmbH & Co. KG, 67657 Kaiserslautern (DE)
(72) Erfinder: Markel, Christian, 55232 Alzey (DE)
(74) Vertreter: Patentanwälte Hosenthien-Held und Dr. Held

(56) Entgegenhaltungen:
- US-A- 5 435 624
- US-B1- 6 447 066
- PATENT ABSTRACTS OF JAPAN Bd. 2000, Nr. 09, 13. Oktober 2000 (2000-10-13) -& JP 2000 177459 A (DAIHATSU MOTOR CO LTD), 27. Juni 2000 (2000-06-27)

## Beschreibung

Die Erfindung betrifft einen Fahrzeugsitz, insbesondere eine Kraftfahrzeug-Rücksitzanlage, mit den Merkmalen des Oberbegriffs des Anspruches 1.

Ein aus der JP 2000-1777459 A bekannter Fahrzeugsitz dieser Art mit drei Sitzplätzen weist außen je eine Lehne als erste Sitzkomponenten und in der Mitte eine Klappe als zweite Sitzkomponente auf, die wie die Lehnen gepolstert ist. Die eine Lehne und die Klappe sind seitlich mittels eines aus mehreren Einzelbeschlägen gebildeten Doppelbeschlags verriegelbar. Zum Durchladen von Gegenständen kann die Klappe entriegelt und gesondert nach vorne geschwenkt werden. Die Vielzahl von Schwenk- und Verriegelungsvorrichtungen macht die Herstellung des Fahrzeugsitzes teuer.

Der Erfindung liegt die Aufgabe zu Grunde, einen Fahrzeugsitz der eingangs genannten Art zu verbessern, insbesondere die Herstellungskosten zu verringern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Mit dem Doppelbeschlag kann die Schwenkbewegung und das Verriegeln jeweils sowohl der ersten Sitzkomponente als auch der zweiten Sitzkomponente gesteuert werden, also mit einem einzigen Beschlag, was die Anzahl der benötigten Schwenk- und Verriegelungsvorrichtungen und damit der in axialer Richtung benötigte Bauraum gering hält. Für diese Funktion weist der Doppelbeschlag in konstruktiv einfachem Aufbau ein wenigstens indirekt mit der Fahrzeugstruktur verbundenes erstes Beschlagteil, ein mit der ersten Sitzkomponente verbundenes zweites Beschlagteil und ein mit der zweiten Sitzkomponente verbundenes drittes Beschlagteil auf. Bei der der ersten Sitzkomponente kann es sich um eine Lehne handeln, während die zweite Sitzkomponente eine Klappe sein kann. Die Erfindung kann aber auch bei anderen schwenkbaren Sitzkomponenten des Fahrzeugsitzes eingesetzt werden, beispielsweise bei Sitzkissen.

Um möglichst wenig unterschiedliche Einzelteile zu benötigen und alle Vorteile ausnutzen zu können, sind das erste Beschlagteil und das dritte Beschlagteil entweder gleich aufgebaut und punktsymmetrisch angeordnet oder spiegelbildlich aufgebaut und angeordnet. Damit können fast alle Einzelteile eines Einfachbeschlags übernommen werden, was Werkzeugkosten spart und wodurch erprobte Eigen - schaften übernommen werden. Der Doppelbeschlag ist dann eine Kombination zweier ineinander gebauter Einfachbeschläge mit einem gemeinsamen zweiten Beschlagteil, welches speziell für den Doppelbeschlag ausgebildet ist.

Für eine einfache Bedienung und einen definierten Ablauf der Schwenkbewegungen weist der gemeinsame Doppelbeschlag vorzugsweise eine erste Verriege - lungsvorrichtung und eine zweite Verriegelungsvorrichtung auf, wobei beim Ent - riegeln der ersten Verriegelungsvorrichtung die erste Sitzkomponente gemeinsam mit der zweiten Sitzkomponente schwenkt und beim Entriegeln der zweiten Verriegelungsvorrichtung die zweite Sitzkomponente relativ zur ersten Sitzkomponente schwenkt, d.h. die zweite Sitzkomponente ist in einem Modus unabhängig von der ersten Sitzkomponente schwenkbar und im anderen Modus zusammen mit dieser. Auch die erste Verriegelungsvorrichtung und die zweite Verriegelungsvorrichtung sind vorzugsweise gleich aufgebaut, um die vorgenannten Vorteile auszunutzen.

Vorzugsweise ist die erste Verriegelungsvorrichtung zwischen dem ersten Be - schlagteil und dem zweiten Beschlagteil und die zweite Verriegelungsvorrichtung zwischen dem zweiten Beschlagteil und dem dritten Beschlagteil vorgesehen. Die Verbindung der verschiedenen Beschlagteile mit Fahrzeugstruktur, erster Sitzkomponente und zweiter Sitzkomponente kann im Falle einer seitlichen Anordnung direkt erfolgen, andernfalls über axial wirksame Verbindungselemente, beispielsweise seitlich abstehende Stäbe oder dergleichen.

Für eine hohe Lastaufnahme, wie sie insbesondere bei freistehenden Lehnen im Crashfall auftritt, weisen in bevorzugter Ausführung wenigstens eine, vorzugsweise aber beide Verriegelungsvorrichtungen eine Klinke, ein die Klinke im Crashfall abstützendes Fangstück und einen vorgespannten, die Klinke wenigstens indirekt beaufschlagenden Spannexzenter auf, wobei die Klinke vorzugsweise mit dem zweiten Beschlagteil zusammenwirkt.

Je nach Anwendungsfall, d.h. ob wenig Bauraum in der Höhe zur Verfügung steht oder bei Lehnen eine im wesentlichen horizontale Tischstellung gewünscht ist, ist die zweite Sitzkomponente vorzugsweise um die gleiche Achse wie die erste Sitzkomponente oder um eine parallel zu dieser Achse versetzte zweite Achse schwenkbar.

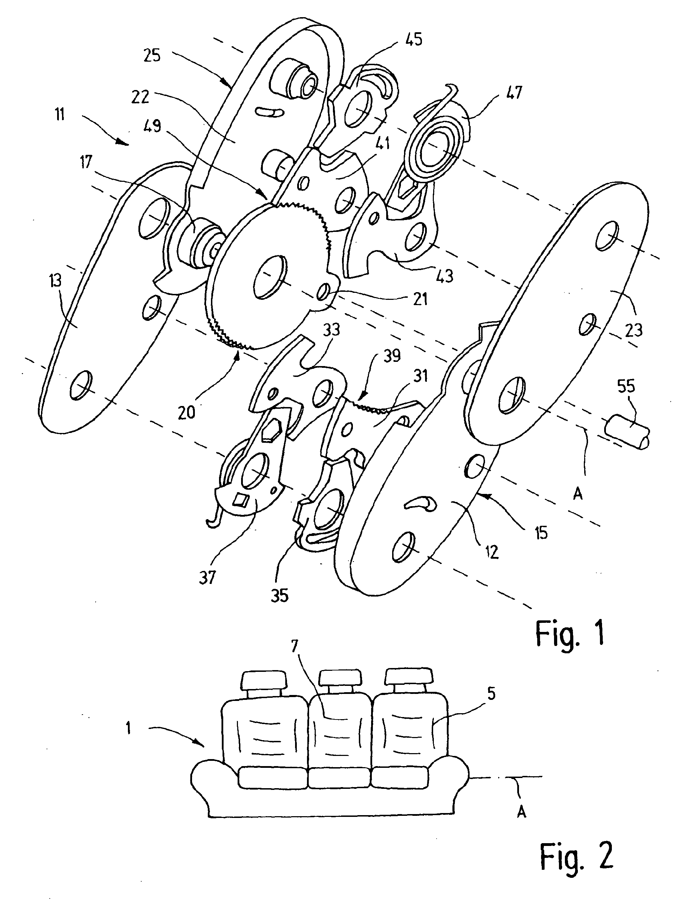

Im folgenden ist die Erfindung anhand eines in der Zeichnung dargestellten Ausführungsbeispiels und einer Abwandlung näher erläutert. Es zeigen
- Fig. 1: eine perspektivische Explosionsdarstellung eines Doppelbeschlags,
- Fig. 2: eine schematisierte Vorderansicht des Ausführungsbeispiels,

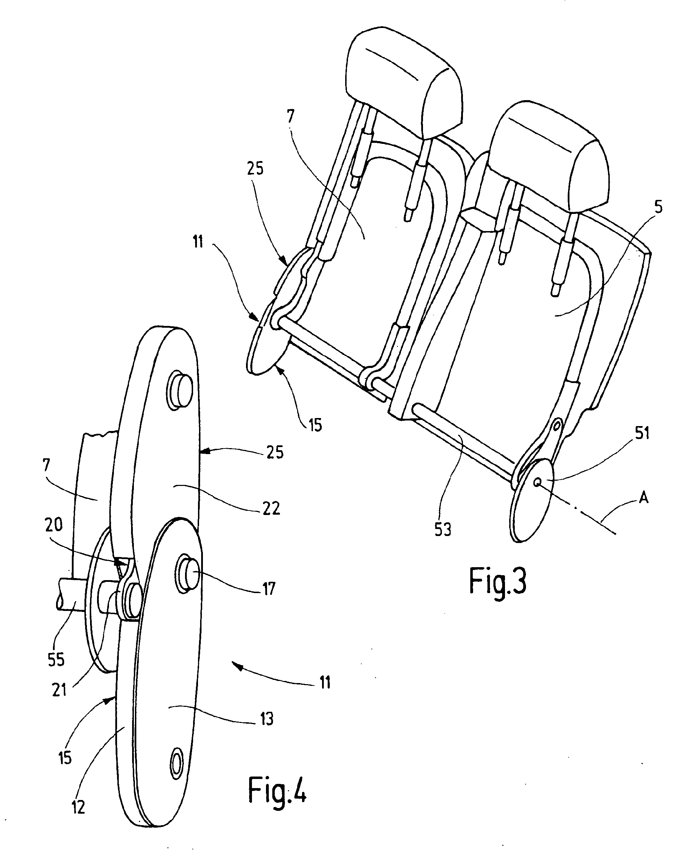

- Fig. 3: eine perspektivische Ansicht der Struktur der linken Lehnenanlage des Ausführungsbeispiels,
- Fig. 4: eine leicht perspektivische Rückansicht des Doppelbeschlags, und

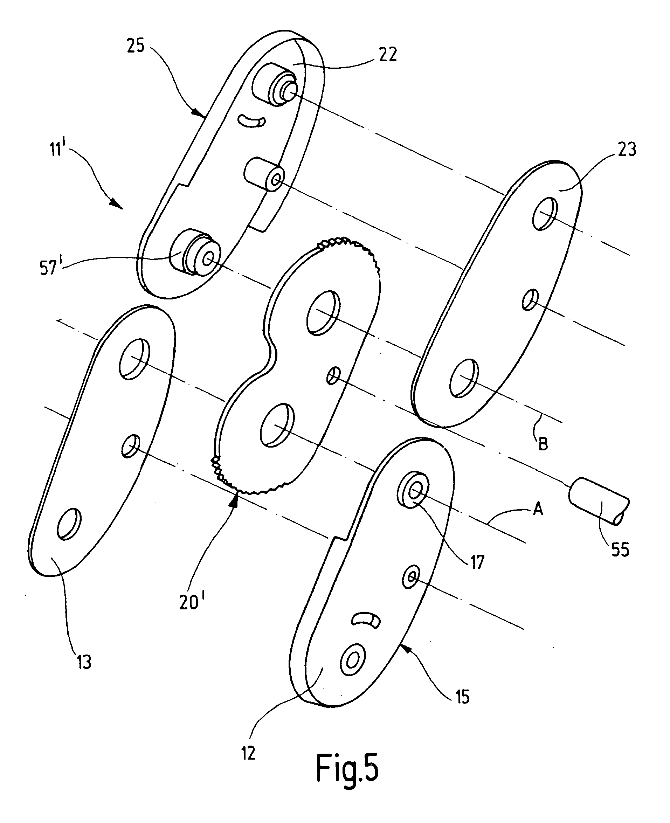

- Fig. 5: eine perspektivische Explosionsdarstellung eines abgewandelten Doppelbeschlags ohne Darstellung der Verriegelungs- und Sicherungselemente.

Ein Fahrzeugsitz 1 ist als Rücksitzanlage eines Kraftfahrzeuges ausgebildet. Die Anordnung des Fahrzeugsitzes 1 innerhalb des Kraftfahrzeuges und dessen gewöhnliche Fahrtrichtung definieren die nachfolgend verwendeten Richtungsangaben. Die Gesamtlehnenanordnung des Fahrzeugsitzes 1 ist unterteilt in eine nicht näher dargestellte, gesondert nach vorne schwenkbare und gesondert mit der Fahrzeugstruktur verriegelbare 40%-Lehnenanordnung an der rechten Fahrzeugsitzseite und eine links davon vorgesehene 60%-Lehnenanordnung. Letztere besteht aus einer gesondert mit der Fahrzeugstruktur verriegelbaren 40%-Lehne als erste Sitzkomponente, im folgenden kurz als Lehne 5 bezeichnet, auf der linken Fahrzeugsitzseite und einer rechts davon angeordneten 20%-Klappenanordnung als zweiter Sitzkomponente, im folgenden kurz als Klappe 7 bezeichnet. Die Klappe 7 bildet eine integrierte Durchladeklappe, die auf die nachfolgend näher beschriebene Weise mit der Lehne 5 verriegelbar und gesondert nach vorne schwenkbar ist, jedoch beim Schwenken der Lehne 5 nach vorne zwangsläufig von dieser mitgenommen wird.

Die Klappe 7 ist auf ihrer rechten Seite mittels eines Doppelbeschlags 11 wenigstens indirekt an der Fahrzeugstruktur angelenkt und indirekt mit dieser verriegelbar. Der Doppelbeschlag 11 weist links ein erstes Gehäuse 12 und rechts einen ersten Deckel 13 auf, welche miteinander verbunden ein erstes Beschlagteil 15 mit einem länglichen Hohlraum definieren. Das erste Beschlagteil 15 ist direkt mit der Fahrzeugstruktur verbunden oder indirekt, indem es am Sitzteil des Fahrzeugsitzes 1 angebracht ist. Am oberen Ende des ersten Beschlagteils 15 wird durch einen drehbar im ersten Gehäuse 12 und ersten Deckel 13 gelagerten Lehnenbolzen 17 eine horizontale Achse A definiert, um welche ein auf dem Lehnenbolzen 17 drehbar gelagertes, gezahntes, nahezu kreisscheibenförmiges zweites Beschlagteil 20 gelagert ist. Das zweite Beschlagteil 20 ist an einer Stelle seines Umfangs mit einer Befestigungslasche 21 versehen.

Die Achse A definiert eine axiale Richtung, welche quer zur Fahrtrichtung verläuft. Das zweite Beschlagteil 20 ist in axialer Richtung zwischen dem ersten Gehäuse 12 und dem ersten Deckel 13 angeordnet. Auf dem Lehnenbolzen 17 ist drehbar ein zweites Gehäuse 22 und ein zweiter Deckel 23 gelagert, welche miteinander verbunden ein drittes Beschlagteil 25 mit einem weiteren länglichen Hohlraum definieren. Dabei ist das zweite Gehäuse 22 in axialer Richtung zwischen dem zweiten Beschlagteil 20 und dem ersten Deckel 13 angeordnet, während der zweite Deckel 23 auf der vom zweiten Beschlagteil 20 abgewandten Seite des ersten Gehäuses 12 vorgesehen ist.

Das erste Beschlagteil 15 und das dritte Beschlagteil 25, welche in der beschriebenen Weise ineinander greifen, sind bezüglich sämtlicher Abmessungen deckungsgleich und lediglich um 180° gedreht zueinander ausgerichtet. Auch der durch Verriegelungselemente und Sicherungselemente sich ergebende innere Aufbau in den Hohlräumen des ersten Beschlagteils 15 und des dritten Beschlagteils 25 stimmt überein.

So ist im ersten Beschlagteil 15 eine gezahnte erste Klinke 31, die mit dem zweiten Beschlagteil 20 zusammenwirkt, und ein axial seitlich der Klinke 31 und des zweiten Beschlagteils 20 angeordneter, mit der ersten Klinke 31 drehfest verbundener erster Steuernocken 33 schwenkbar gelagert, der mit einer nicht näher dargestellten Steuerscheibe auf dem zweiten Beschlagteil 20 zusammenwirken kann. Ferner ist im ersten Beschlagteil 15 ein erstes Fangstück 35, das die erste Klinke 31 im Crashfall auf der vom zweiten Beschlagteil 20 abgewandten Seite abstützt und dadurch ein Außereingriffkommen verhindert, und ein erster Spannexzenter 37 gelagert, der federvorgespannt den ersten Steuernocken 33 beaufschlagt und damit für den spielfreien Zahneingriff von erster Klinke 31 und zweitem Beschlagteil 20 sorgt. Die erste Klinke 31 und das zweite Beschlagteil 20 definieren eine erste Verriegelungsvorrichtung 39. Zum Entriegeln dieser ersten Verriegelungsvorrichtung 39 wird zunächst das erste Fangstück 35 aufgeschwenkt, welches den ersten Spannexzenter 37 mitnimmt und die erste Klinke 31 aufzieht.

In genau gleicher Weise sind im dritten Beschlagteil 25 eine zweite Klinke 41, ein zweiter Steuernocken 43, ein zweites Fangstück 45 und ein zweiter Spannexzenter 47 angeordnet und gelagert, die auch in gleicher Weise zusammenwirken. Die zweite Klinke 41 und das zweite Beschlagteil 20 definieren eine zweite Verriegelungsvorrichtung 49.

Die Lehne 5 ist auf ihrer linken Seite mittels eines Drehgelenks 51, bei welchem es sich auch um einen einfachen Beschlag mit der Hälfte der Bauteile des Doppelbeschlags 11 handeln kann, an der Fahrzeugstruktur direkt angelenkt oder indirekt, indem sie am Sitzteil des Fahrzeugsitzes 1 angelenkt ist. Das Drehgelenk 51 ist ebenfalls um die Achse A schwenkbar, d.h. es handelt sich vorliegend um eine einachsig schwenkbare Lehnenanordnung. Als gemeinsames Drehlager für die Klappe 7 und die Lehne 5 ist ein die Achse A umschließendes Rohr 53 vorgesehen.

Während die Klappe 7 mit ihrer Struktur am dritten Beschlagteil 25 angebracht ist, ist die in axialer Richtung neben der Klappe 7 angeordnete Lehne 5 mittels eines stabförmigen Verbindungselementes 55 an der Befestigungslasche 21 angebracht, also mit dem zweiten Beschlagteil 20.verbunden. Der Doppelbeschlag 11 hält sowohl die Klappe 7 als auch die Lehne 5 verriegelt. Wird nun die zweite Verriegelungsvorrichtung 49 entriegelt, so kann die Klappe 7 gesondert nach vorne geschwenkt werden. Wird hingegen die erste Verriegelungsvorrichtung 39 entriegelt, so schwenken die Lehne 5 und die mit ihr mittels der zweiten Verriegelungsvorrichtung 49 verriegelte Klappe 7 gemeinsam nach vorne.

In einer Abwandlung zu diesem Ausführungsbeispiel ist der abgewandelte Doppelbeschlag 11' zweiachsig ausgebildet, stimmt aber ansonsten mit dem Ausführungsbeispiel überein, soweit nachfolgend nicht anders beschrieben, weshalb gleiche Bauteile die gleichen Bezugszeichen tragen. Das abgewandelte zweite Beschlagteil 20' umschließt nicht nur den auf der ersten Achse A ausgerichteten Lehnenbolzen 17, sondern versetzt dazu auch einen Klappenbolzen 57', welcher eine zur ersten Achse A parallele zweite Achse B definiert. Das zweite Beschlagteil 20' ist weiterhin relativ zum ersten Beschlagteil 15 um die erste Achse A schwenkbar und mittels der ersten Verriegelungsvorrichtung 39 mit dem ersten Beschlagteil 15 verriegelbar. Das dritte Beschlagteil 25 ist relativ zum zweiten Beschlagteil 20' um die zweite Achse B schwenkbar und mittels der zweiten Verriegelungsvorrichtung 49 mit dem zweiten Beschlagteil 20' verriegelbar.

Die Klappe 7 ist weiterhin am dritten Beschlagteil 25 und die Lehne 5 weiterhin am zweiten Beschlagteil 20' angebracht. Die Funktionsweise ist ebenfalls die gleiche wie im Ausführungsbeispiel. Da jedoch die Klappe 7 beim gesonderten Schwenken um die gegenüber der ersten Achse A höher angeordnete zweite Achse B schwenkt, kann die Klappe 7 wegen deutlich geringerer Polsterpressung eine mehr horizontale Endstellung erreichen, d.h. eine im wesentlichen horizontale Tischstellung, was für das Durchladen von Vorteil sein kann.

### Bezugszeichenliste

- 1: Fahrzeugsitz
- 5: Lehne, erste Sitzkomponente
- 7: Klappe, zweite Sitzkomponente
- 11, 11': Doppelbeschlag
- 12: erstes Gehäuse
- 13: erster Deckel
- 15: erstes Beschlagteil
- 17: Lehnenbolzen
- 20, 20': zweites Beschlagteil
- 21: Befestigungslasche
- 22: zweites Gehäuse
- 23: zweiter Deckel
- 25: drittes Beschlagteil
- 31: erste Klinke
- 33: erster Steuernocken
- 35: erstes Fangstück
- 37: erster Spannexzenter
- 39: erste Verriegelungsvorrichtung
- 41: zweite Klinke
- 43: zweiter Steuernocken
- 45: zweites Fangstück
- 47: zweiter Spannexzenter
- 49: zweite Verriegelungsvorrichtung
- 51: Drehgelenk
- 53: Rohr
- 55: Verbindungsstab
- 57': Klappenbolzen
- A: (erste) Achse
- B: zweite Achse

## Patentansprüche

1. Fahrzeugsitz, insbesondere Kraftfahrzeug-Rücksitzanlage, mit wenigstens einer um eine Achse (A) schwenkbaren ersten Sitzkomponente (5), die wenigstens indirekt mit der Fahrzeugstruktur verriegelbar ist, und einer in axialer Richtung der Achse (A) versetzt angeordneten, schwenkbaren zweiten Sitzkomponente (7), die mit der ersten Sitzkomponente (5) verriegelbar ist, wobei zum Schwenken und Verriegeln der ersten Sitzkomponente (5) und der zweiten Sitzkomponente (7) wenigstens ein Doppelbeschlag (11; 11') vorgesehen ist, welcher ein wenigstens indirekt mit der Fahrzeugstruktur verbundenes erstes Beschlagteil (15), ein mit der ersten Sitzkomponente (5) verbundenes zweites Beschlagteil (20; 20') und ein mit der zweiten Sitzkomponente (7) verbundenes drittes Beschlagteil (25) aufweist, **dadurch gekennzeichnet, dass** das erste Beschlagteil (15) und das dritte Beschlagteil (25) gleich aufgebaut und punktsymmetrisch angeordnet oder spiegelbildlich aufgebaut und angeordnet sind.

2. Fahrzeugsitz nach Anspruch 1, **dadurch gekennzeichnet, dass** der Doppelbeschlag (11; 11') eine erste Verriegelungsvorrichtung (39) und eine zweite Verriegelungsvorrichtung (49) aufweist, wobei beim Entriegeln der ersten Verriegelungsvorrichtung (39) die erste Sitzkomponente (5) gemeinsam mit der zweiten Sitzkomponente (7) schwenkt und beim Entriegeln der zweiten Verriegelungsvorrichtung (49) die zweite Sitzkomponente (7) relativ zur ersten Sitzkomponente (5) schwenkt.

3. Fahrzeugsitz nach Anspruch 2, **dadurch gekennzeichnet, dass** die erste Verriegelungsvorrichtung (39) zwischen dem ersten Beschlagteil (15) und dem zweiten Beschlagteil (20; 20') und die zweite Verriegelungsvorrichtung (49) zwischen dem zweiten Beschlagteil (20; 20') und dem dritten Beschlagteil (25) vorgesehen ist.

4. Fahrzeugsitz nach Anspruch 2 oder 3, **dadurch gekennzeichnet, dass** wenigstens eine der beiden Verriegelungsvorrichtungen (39,49) eine Klinke (31, 41), ein die Klinke (31, 41) im Crashfall abstützendes Fangstück (35, 45) und einen vorgespannten, die Klinke (31, 41) wenigstens indirekt beaufschlagenden Spannexzenter (37, 49) aufweist.

5. Fahrzeugsitz nach Anspruch 3 und 4, **dadurch gekennzeichnet, dass** die Klinke (31, 41) der Verriegelungsvorrichtung (39, 49) mit dem zweiten Beschlagteil (20; 20') zusammenwirkt.

6. Fahrzeugsitz nach einem der Ansprüche 2 bis 5, **dadurch gekennzeichnet, dass** die erste Verriegelungsvorrichtung (39) und die zweite Verriegelungsvorrichtung (49) gleich aufgebaut sind.

7. Fahrzeugsitz nach einem der Ansprüche 1 bis 6, **dadurch gekennzeichnet, dass** der Doppelbeschlag (11; 11') an der Seite der zweiten Sitzkomponente (7) angeordnet ist und mit der ersten Sitzkomponente (5) insbesondere mittels eines Verbindungsstabes (55) in Verbindung steht.

8. Fahrzeugsitz nach einem der Ansprüche 1 bis 7, **dadurch gekennzeichnet, dass** die zweite Sitzkomponente (7) um die Achse (A) oder um eine parallel dazu versetzte zweite Achse (B) schwenkbar ist.

## Claims

1. Vehicle seat, in particular a motor vehicle rear seat assembly, having at least a first seat component (5) which can be pivoted about an axis (A) and which can be locked at least indirectly to the vehicle structure, and having a pivotable second seat component (7) which is arranged offset in an axial direction of the axis (A) and which can be locked to the first seat component (5), at least one dual fitting (11; 11') being provided in order to pivot and lock the first seat component (5) and the second seat component (7), and having a first fitting member (15) which is connected at least indirectly to the vehicle structure, a second fitting member (20; 20') which is connected to the first seat component (5) and a third fitting member (25) which is connected to the second seat component (7), **characterised in that** the first fitting member (15) and the third fitting member (25) are constructed in an identical manner and arranged in a point-symmetrical manner or are constructed and arranged as mirror images of each other.

2. Vehicle seat according to claim 1, **characterised in that** the dual fitting (11; 11') has a first locking device (39) and a second locking device (49), the first seat component (5) pivoting together with the second seat component (7) when the first locking device (39) is unlocked and the second seat component (7) pivoting relative to the first seat component (5) when the second locking device (49) is unlocked.

3. Vehicle seat according to claim 2, **characterised in that** the first locking device (39) is provided between the first fitting member (15) and the second fitting member (20; 20') and the second locking device (49) is provided between the second fitting member (20; 20') and the third fitting member (25).

4. Vehicle seat according to claim 2 or 3, **characterised in that** at least one of the two locking devices (39, 49) has a detent (31, 41), a catch piece (35, 45) which supports the detent (31, 41) in the event of a crash, and a pretensioned locking cam (37, 49) which acts at least indirectly on the detent (31, 41).

5. Vehicle seat according to claims 3 and 4, **characterised in that** the detent (31, 41) of the locking device (39, 49) cooperates with the second fitting member (20; 20').

6. Vehicle seat according to any one of claims 2 to 5, **characterised in that** the first locking device (39) and the second locking device (49) are constructed in an identical manner.

7. Vehicle seat according to any one of claims 1 to 6, **characterised in that** the dual fitting (11; 11') is arranged at the side of the second seat component (7) and is connected to the first seat component (5), in particular by means of a connection rod (55).

8. Vehicle seat according to any one of claims 1 to 7, **characterised in that** the second seat component (7) can be pivoted about the axis (A) or a second axis (B) which is offset parallel therewith.

## Revendications

1. - Siège de véhicule, en particulier installation de siège arrière de véhicule automobile, comportant au moins un premier composant de siège (5) apte à pivoter autour d'un axe (A), qui est apte à être verrouillé au moins indirectement avec la structure de véhicule, et un deuxième composant de siège (7) apte à pivoter, disposé décalé en direction axiale de l'axe (A), qui est apte à être verrouillé avec le premier composant de siège (5), à l'occasion de quoi, pour le basculement et le verrouillage du premier composant de siège (5) et du deuxième composant de siège (7) est prévue au moins une double armature (11 ; 11'), laquelle présente une première partie d'armature (15) reliée au moins indirectement avec la structure de véhicule, une deuxième partie d'armature (20; 20') reliée avec le premier composant de siège (5) et une troisième partie d'armature (25) reliée avec le deuxième composant de siège (7), **caractérisé par le fait que** la première partie d'armature (15) et la troisième partie d'armature (25) sont construites de manière identique et disposées à symétrie ponctuelle ou sont construites et disposées en image dans un miroir.

2. - Siège de véhicule selon la revendication 1, **caractérisé par le fait que** la double armature (11 ; 11') présente un premier dispositif de verrouillage (39) et un deuxième dispositif de verrouillage (49), à l'occasion de quoi, lors du déverrouillage du premier dispositif de verrouillage (39), le premier composant de siège (5) pivote conjointement avec le deuxième composant de siège (7), et, lors du déverrouillage du deuxième dispositif de verrouillage (49), le deuxième composant de siège (7) pivote relativement au premier composant de siège (5).

3. - Siège de véhicule selon la revendication 2, **caractérisé par le fait que** le premier dispositif de verrouillage (39) est prévu entre la première partie d'armature (15) et la deuxième partie d'armature (20 ; 20'), et le deuxième dispositif de verrouillage (49), entre la deuxième partie d'armature (20 ; 20') et la troisième partie d'armature (25).

4. - Siège de véhicule selon l'une des revendications 2 ou 3, **caractérisé par le fait qu'**au moins l'un des deux dispositifs de verrouillage (39, 49) présente un cliquet (31, 41), une pièce d'arrêt (35, 45) supportant le cliquet (31, 41) en cas d'accident, et un excentrique de serrage (37, 49) frappant au moins indirectement le cliquet (31, 41).

5. - Siège de véhicule selon l'une des revendications 3 et 4, **caractérisé par le fait que** le cliquet (31, 41) du dispositif de verrouillage (39, 49) coopère avec la deuxième partie d'armature (20 ; 20').

6. - Siège de véhicule selon l'une des revendications 2 à 5, **caractérisé par le fait que** le premier dispositif de verrouillage (39) et le deuxième dispositif de verrouillage (49) sont construits de manière identique.

7. - Siège de véhicule selon l'une des revendications 1 à 6, **caractérisé par le fait que** la double armature (11 ; 11') est disposée sur le côté du deuxième composant de siège (7) et est en liaison avec le premier composant de siège (5) en particulier au moyen d'une barre de liaison (55).

8. - Siège de véhicule selon l'une des revendications 1 à 7, **caractérisé par le fait que** le deuxième composant de siège (7) est apte à pivoter autour de l'axe (A) ou d'un deuxième axe (B) décalé parallèle à celui-ci.
